# FASCICULE DE BREVET EUROPEEN

(11) **EP 1 108 896 B1**
(45) Date de publication et mention de la délivrance du brevet: **10.03.2004**
(21) Numéro de dépôt: 00403524.2
(22) Date de dépôt: 14.12.2000
(51) Int. Cl.: F16B 5/01

(54) **Jonction composite pour le montage d'au moins un organe extérieur sur un panneau sandwich**
Verbundverbindung zur Montage mindestens eines Aussenelementes auf einer Sandwichplatte
Composite fastening element for mounting an external element on a sandwich panel

(30) Priorité: 17.12.1999 BE 9900817
(43) Date de publication de la demande: 20.06.2001
(73) Titulaire: Sonaca S.A., 6041 Gosselies (BE)
(72) Inventeur: Bertin, André, 5020 Vedrin (BE)
(74) Mandataire: Poulin, Gérard

(56) Documents cités:
- WO-A-97/26958
- US-A- 3 742 663
- US-A- 4 845 915

## Description

### Domaine technique

L'invention concerne une jonction composite, conçue pour être intégrée à un panneau sandwich de façon à permettre le montage d'au moins un organe extérieur sur ce panneau, conformement à la préambule de la revendication 1 (US 4 845 915).

En particulier, la jonction composite selon l'invention est conçue pour permettre la transmission d'efforts statiques et/ou dynamiques importants entre un panneau sandwich et un ou plusieurs organes ancrés sur ce panneau.

L'invention concerne également un panneau sandwich intégrant une ou plusieurs jonctions composites de ce type.

L'invention trouve une application privilégiée dans les industries aéronautique et spatiale. Elle peut toutefois être utilisée dans d'autres domaines techniques, sans sortir du cadre de l'invention.

### Etat de la technique antérieure

Des panneaux sandwichs sont utilisés dans de nombreuses industries, principalement en raison de leur légèreté et de leur grande rigidité, notamment en flexion.

Un panneau sandwich est formé d'une âme alvéolée et de deux couches de revêtement placées de part et d'autre de celle-ci. L'âme alvéolée se présente généralement sous la forme d'une structure en nid d'abeilles ou en mousse. Cette configuration procure un gain de poids important par rapport à une structure homogène de même rigidité. Selon l'utilisation envisagée, les couches de revêtement et l'âme alvéolée sont métalliques et/ou composites et/ou synthétiques.

Dans l'industrie aéronautique, il est connu d'utiliser des panneaux sandwichs pour réaliser, par exemple, des planchers de cabines, des cloisons intérieures et des éléments de voilures. De tels panneaux sont également utilisés dans l'industrie spatiale, où la réduction de poids est impérative. Des efforts importants sont alors transmis aux structures lors des phases de décollage. De plus, des contraintes thermiques élevées sont présentes, du fait des gradients de température importants qui existent entre les zones d'ombres et les zones ensoleillées.

Par ailleurs, on sait qu'un matériau composite constitué en partie de résine dégage dans l'espace l'eau présente dans sa structure, ce qui a pour effet d'engendrer des déplacements susceptibles de modifier la position des instruments ou des équipements montés sur le panneau.

Lorsqu'un organe extérieur quelconque est monté sur un panneau sandwich, la jonction doit être réalisée de façon à transmettre aux revêtements et à l'âme du panneau des efforts de toute nature sans provoquer une rupture ou des déformations permanentes. De plus, la durée de vie de la jonction doit être compatible avec la durée de vie recherchée pour le panneau.

Pour réaliser une telle jonction, une solution connue consiste à intégrer dans le panneau une pièce rapportée monolithique de forme quelconque, le plus souvent métallique. Cette pièce rapportée, habituellement appelée "insert", est dimensionnée pour recevoir les efforts et pour diffuser les contraintes vers le panneau.

Les inserts utilisés habituellement pour assurer la jonction entre un organe extérieur et un panneau sandwich peuvent soit traverser le panneau de part en part, soit être non débouchants. Dans ce dernier cas, l'insert est généralement inclus dans le panneau avant le collage des revêtements sur l'âme alvéolée. Lorsque l'insert traverse le panneau, il est généralement placé dans une cavité usinée dans l'un au moins des revêtements et dans l'âme du panneau. L'ancrage de l'insert dans la cavité est alors assuré par un matériau solidifié tel qu'une résine ou un film moussant. A titre d'exemple, les documents US-A-5 240 543, US-A-5 378 099, FR-A-1 243 582, FR-A-1 132 264 et FR-A-2 452 021 concernent différents types d'inserts traversant complètement un panneau sandwich.

Lorsque cette technique classique est utilisée, les performances mécaniques des inserts peuvent être optimisées en leur donnant un contour extérieur apte à accrocher la résine. De plus, les dimensions de la cavité dans laquelle est logé l'insert tiennent compte de la forme de celui-ci et des efforts transmis au travers de la jonction. Ainsi, les périmètres de la cavité et de l'insert sont choisis en fonction des contraintes de cisaillement qui doivent être transmises par l'interface entre l'insert et le panneau, afin que le niveau de contraintes reste acceptable pour les matériaux utilisés.

Cette technique de jonction classique présente toutefois un certain nombre d'inconvénients.

Ainsi, le respect des différents paramètres qui viennent d'être énoncés conduit généralement à utiliser des inserts de relativement grandes dimensions dont la masse, augmentée de celle de la résine de fixation, accroît sensiblement le poids du panneau sandwich. Ce phénomène est particulièrement sensible lorsqu'un insert unique intègre plusieurs points de fixation.

Par ailleurs, la zone matérialisée par l'insert présente des propriétés physiques différentes de celles du reste du panneau sandwich. La discontinuité ainsi formée engendre une distorsion dans les déformations du panneau, notamment dans le cas où celui-ci est soumis à des sollicitations thermiques. Cette discontinuité est particulièrement pénalisante dans le cas d'un insert monolithique de grande dimension.

Par ailleurs, on connaît des panneaux sandwichs dont l'âme alvéolée est constituée de cellules tubulaires juxtaposées formées de mèches de fibres tressées, comme le montre le document "Composite Airframe Structure" publié en septembre 1995, pages 270 et 271. Dans un tel panneau, les cellules sont disposées côte à côte dans le sens longitudinal, c'est-à-dire parallèlement aux couches de revêtement du panneau, et elles forment l'intégralité de l'âme du panneau. Un panneau réalisé conformément à ce document n'est capable de recevoir qu'un chargement uniformément réparti sur toute sa surface.

### Exposé de l'invention

L'invention a pour objet une jonction composite dont la configuration originale lui permet d'assurer la transmission progressive des efforts entre un organe extérieur relativement rigide et l'âme alvéolée, sensiblement moins rigide, d'un panneau sandwich, tout en procurant une grande stabilité dimensionnelle en présence de sollicitations thermiques et/ou hygroscopiques.

Conformément à l'invention, ce résultat est obtenu au moyen d'une jonction composite, pour le montage d'au moins un organe extérieur sur un panneau sandwich comprenant une âme alvéolée et deux couches de revêtement placées de part et d'autre de celle-ci, ladite jonction étant caractérisée en ce qu'elle comprend une pluralité de cellules tubulaires élémentaires juxtaposées aptes à être orientées dans le sens de l'épaisseur du panneau, à l'intérieur d'un évidement formé dans l'âme du panneau sandwich, et au moins une cellule d'introduction d'efforts dans laquelle est logée au moins une pièce rigide de fixation dudit organe extérieur, chaque cellule d'introduction d'efforts étant séparée d'un bord périphérique de la jonction, dans toutes les directions, par au moins une cellule tubulaire élémentaire.

Dans une jonction composite ainsi conçue, il est possible d'adapter la section et la taille des cellules tubulaires, leur nombre ainsi que l'épaisseur et l'orientation des cloisons en fonction de l'intensité et de l'orientation des efforts qui doivent être transmis entre la pièce rigide et l'âme alvéolée du panneau, afin par exemple que la rigidité de la jonction évolue progressivement entre la pièce rigide et l'âme du panneau. Par comparaison avec un insert monobloc classique utilisé dans les mêmes conditions, la jonction composite selon l'invention est placée dans une cavité présentant sensiblement les mêmes dimensions. Par conséquent, la pièce rigide, qui peut notamment être métallique, est beaucoup plus petite et donc nettement moins lourde qu'un insert traditionnel. La jonction composite selon l'invention procure donc un gain de poids qui peut atteindre environ 50 % selon l'application.

Dans un mode de réalisation préféré de l'invention, chacune des cellules tubulaires élémentaires comprend une paroi composite formée de mèches de fibres tressées et de résine. Les cellules tubulaires élémentaires, qui constituent la majeure partie de la jonction composite, peuvent donc être réalisées à partir d'une combinaison de matériaux intrinsèquement stables (fibres, par exemple de carbone, stables thermiquement, et résine stable du point de vue prise en eau). Par ailleurs, les conséquences d'une éventuelle désorbtion dans le vide sont très faibles, puisque la jonction contient un faible volume de résine par rapport au volume de fibres et une résine de grande stabilité hygroscopique peut être choisie. La jonction composite ainsi réalisée présente donc une stabilité dimensionnelle très supérieure à celle d'un insert classique.

Dans le mode de réalisation préféré de l'invention, les cellules tubulaires élémentaires juxtaposées sont séparées par des cloisons dont chacune comprend deux parois composites liées l'une à l'autre par de la résine. Pour parvenir à ce résultat, on peut notamment fabriquer la jonction en utilisant la technique du moulage par transfert de résine ou technique RTM ("Resin Transfer Molding"). Des préformes de fibres sèches correspondant aux cellules tubulaires élémentaires sont alors placées dans un moule. La jonction est obtenue en injectant une résine sous pression dans le moule, puis en polymérisant cette résine.

Afin d'assurer une transmission efficace des efforts, les cloisons de séparation des cellules tubulaires élémentaires juxtaposées sont alignées selon au moins deux directions différentes de transmission d'efforts.

De préférence, les cloisons de séparation des cellules tubulaires élémentaire juxtaposées forment des plans aptes à être orientés perpendiculairement aux couches de revêtement du panneau sandwich.

Dans un mode de réalisation particulier, non limitatif, de l'invention, au moins certaines des cellules tubulaires élémentaires ont une section carrée.

Dans ce cas, les cellules tubulaires élémentaires de section carrée dont une diagonale passe par une cellule d'introduction d'efforts peuvent comprendre avantageusement une cloison interne orientée selon cette diagonale.

La pièce rigide, qui peut être métallique ou réalisée en tout autre matériau approprié, est liée de préférence à la cellule d'introduction d'efforts par de la résine. Lorsque la jonction est fabriquée selon la technique RTM, la pièce rigide est alors intégrée à la jonction lors du moulage.

L'organe extérieur peut être fixé à la pièce rigide soit directement, soit par l'intermédiaire d'une pièce de liaison de forme quelconque appropriée. Dans tous les cas, la pièce rigide peut notamment comprendre un trou de fixation orienté selon une direction longitudinale par rapport à la cellule d'introduction d'efforts.

L'invention concerne également un panneau sandwich incorporant une ou plusieurs jonctions composites de ce type.

### Brève description des dessins

On décrira à présent, à titre d'exemples non limitatifs, différents modes de réalisations de l'invention, en se référant aux dessins annexés, dans lesquels :
- la figure 1 est une vue en perspective illustrant isolément une jonction composite conforme à l'invention ;
- la figure 2 est une vue de dessus, en coupe, représentant un autre mode de réalisation d'une jonction composite selon l'invention, intégrée à un panneau sandwich, le revêtement supérieur du panneau étant volontairement omis ;
- la figure 3 est une vue en coupe selon la ligne III-III de la figure 2 ;
- la figure 4 est une vue de dessus, en coupe, illustrant un autre mode de réalisation d'une jonction composite conforme à l'invention ; et
- la figure 5 est une vue en coupe comparable à la figure 3, illustrant l'utilisation d'une pièce de liaison entre la pièce rigide de l'insert et l'organe extérieur.

### Description détaillée de modes de réalisation préférés de l'invention

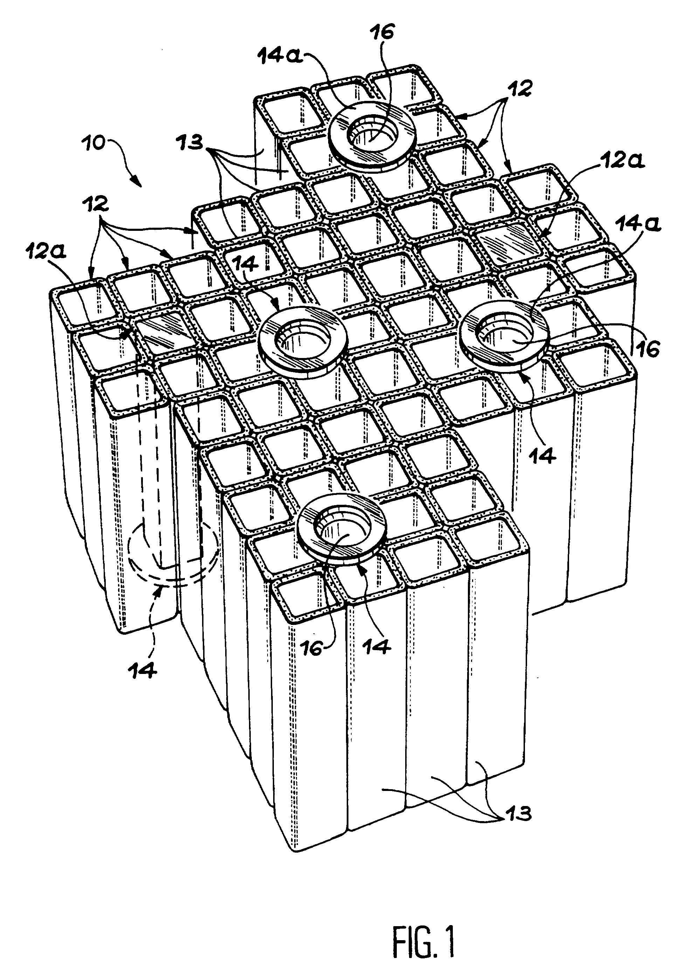

Sur la figure 1, on a représenté à titre d'exemple un premier mode de réalisation d'une jonction composite conforme à l'invention. Cette jonction composite, désignée de façon générale par la référence 10, comprend une pluralité de cellules tubulaires élémentaires 12, juxtaposées parallèlement les unes aux autres de façon à former une plaque d'épaisseur uniforme, dans laquelle les cellules tubulaires élémentaires 12 sont orientées perpendiculairement au plan de ladite plaque. Comme on le comprendra mieux par la suite, la forme et les dimensions de la plaque formée par les cellules tubulaires élémentaires 12 juxtaposées dépendent du nombre et de l'emplacement des points d'ancrage prévus dans la jonction 10.

Chacune des cellules tubulaires élémentaires 12 se présente sous la forme d'un tronçon de tube dont la longueur correspond à l'épaisseur de la plaque et dont la section est carrée, dans le mode de réalisation représenté.

Dans la pratique, les tronçons de tubes formant les cellules tubulaires élémentaires 12 sont réalisés à partir d'une préforme tubulaire sèche obtenue en tressant des mèches de fibres sur un mandrin dont la section est complémentaire de celle des cellules tubulaires élémentaires 12. La section de ce mandrin est donc carrée dans le mode de réalisation représenté sur la figure 1. La préforme tubulaire ainsi obtenue est ensuite découpée en tronçons d'égale longueur, cette longueur étant égale à l'épaisseur de la plaque à réaliser.

Lors d'une phase ultérieure de la fabrication de la jonction composite 10, les tronçons de tubes sont placés côte à côte dans la cavité d'un moule. Cette cavité présente la forme de la jonction composite 10 à réaliser. Des noyaux solubles ou démontables sont placés à l'intérieur des tronçons de tubes lors du processus de tressage. Eventuellement, un noyau peut être placé ou remplacé après le tressage. Par ailleurs, une pièce rigide 14 est montée à la place de chacun des tronçons de tubes 12 ou à l'intérieur de ceux-ci, aux emplacements qui doivent servir de point d'ancrage. Les cellules contenant les pièces rigides 14, dans la jonction composite 10, seront appelées "cellules d'introduction d'efforts" et désignées par la référence 12a, dans la suite du texte . Chaque cellule d'introduction d'efforts 12a peut donc être délimitée par un tronçon de tube propre à cette cellule, ou par les parois des tronçons de tubes voisins.

Le moule est ensuite fermé et une résine est injectée sous pression à l'intérieur de celui-ci, selon la technique RTM. L'injection sous pression de la résine a pour effet d'imprégner les parois des tronçons de tubes, formées de mèches de fibres tressées. La résine est ensuite polymérisée, après quoi le moule est ouvert et la jonction composite 10 extraite de celui-ci.

Dans la jonction composite 10 ainsi réalisée, la paroi composite 13 de chacune des cellules tubulaires élémentaires 12 est formée de mèches de fibres tressées et de résine. De plus, les cellules tubulaires élémentaires 12 juxtaposées sont séparées par des cloisons dont chacune comprend deux parois composites 13 liées l'une à l'autre par de la résine.

Comme l'illustre bien la figure 1, la jonction composite 10 est réalisée de façon telle que les cloisons de séparation des cellules tubulaires élémentaires 12 juxtaposées sont alignées selon deux directions différentes de transmission d'efforts, orthogonales l'une à l'autre ainsi qu'au plan de la plaque.

Il est à noter que cette orientation particulière des cloisons séparant les cellules 12 découle de la section carrée de ces cellules. L'utilisation de cellules présentant des sections différentes, par exemple en forme de losanges ou de triangles, se traduirait par des orientations différentes des cloisons de séparation de ces cellules. Il est à noter également que la jonction composite 10 selon l'invention peut comprendre des cellules tubulaires élémentaires 12 présentant au moins deux sections différentes dans l'ensemble de la jonction.

Comme l'illustre en particulier la figure 1, chacune des cellules d'introduction d'efforts 12a est placée dans la jonction composite 10 de façon telle que cette cellule 12a est séparée des bords périphériques de la jonction et des autres cellules d'introduction d'efforts 12a par au moins une cellule tubulaire élémentaire 12, dans toutes les directions. En d'autres termes, chacune des cellules d'introduction d'efforts 12a est entourée dans toutes les directions par au moins une cellule tubulaire élémentaire 12 ne contenant pas de pièce rigide 14. Cette caractéristique permet d'être certain que l'effort appliqué à la jonction 10 au travers de l'une quelconque des pièces rigides 14 transitera par au moins une cellule tubulaire élémentaire 12, avant d'être transmis au panneau sandwich dans lequel la jonction composite 10 doit être intégrée.

Chacune des pièces rigides 14 présente extérieurement une forme complémentaire de celle de la cellule d'introduction d'efforts 12a dans laquelle cette pièce est reçue. Lorsque les pièces rigides 14 sont insérées dans les cellules d'introduction d'efforts 12a avant la mise en oeuvre de la technique RTM, comme on l'a décrit précédemment, les pièces rigides 14 sont liées aux parois des cellules de transmission d'efforts 12a par la résine injectée dans le moule.

En variante, les pièces rigides 14 peuvent aussi être placées dans les cellules d'introduction d'efforts 12a après la fabrication de la plaque. Elles sont alors fixées dans les cellules d'introduction d'efforts par exemple par collage ou par tout autre moyen garantissant une transmission efficace et sûre des efforts.

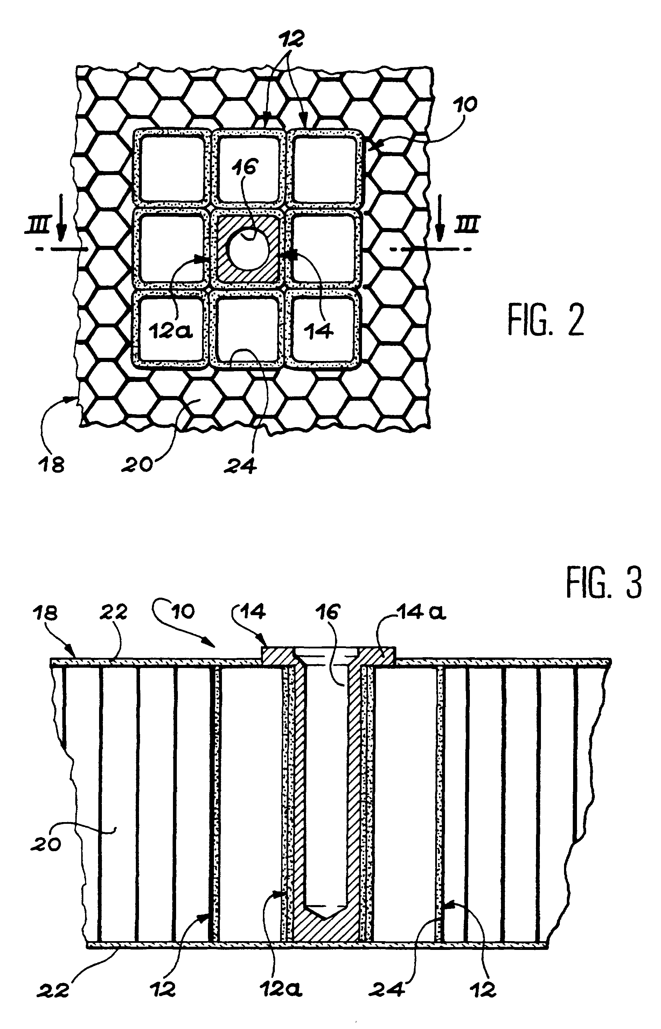

Dans le mode de réalisation illustré à titre d'exemple sur la figure 1, la jonction composite 10 comprend six points de transmission d'efforts matérialisés par six cellules d'introduction d'efforts 12a contenant chacune une pièce rigide 14. Plus précisément, quatre des pièces rigides 14 sont prévues pour assurer la fixation d'un organe extérieur sur la face supérieure de la jonction en considérant la figure 1. Les deux autres pièces rigides 14 sont prévues pour servir d'ancrage à un autre organe extérieur venant se fixer sur la face inférieure de la jonction. Selon l'application envisagée, le nombre des organes à fixer sur une même jonction 10 ainsi que le nombre des pièces rigides 14 peuvent être des nombres quelconques supérieurs ou égaux à 1. Ainsi, les figures 2 et 3 illustrent le cas où la jonction 10 comprend une seule pièce rigide 14.

Dans les modes de réalisation illustrés sur les figures 1 à 3, chacune des pièces rigides 14 comprend un trou de fixation 16, orienté selon une direction longitudinale par rapport à la cellule d'introduction d'efforts 12a contenant la pièce rigide. Le plus souvent, le trou de fixation 16 est débouchant afin de gagner du poids et d'éviter d'emprisonner une bulle d'air, dans le domaine spatial. A une extrémité du trou 16, la pièce rigide 14 peut, éventuellement présenter une collerette 14a qui fait saillie sur la face correspondante de la plaque et vient en appui sur les extrémités des cellules tubulaires élémentaires 12 adjacentes.

L'extrémité fermée de chacune des pièces rigides 14 affleure la face opposée de la plaque. Avantageusement, le trou borgne de fixation 16 pratiqué dans chacune des pièces rigides 14 est un trou taraudé, dans lequel peut être vissée une tige filetée destinée à la fixation de l'organe extérieur.

Il est à noter qu'en variante, les pièces rigides 14 destinées à la fixation d'un organe extérieur peuvent présenter une configuration différente, sans sortir du cadre de l'invention. Ainsi, et uniquement à titre d'exemple, au lieu de comprendre un trou de fixation, chaque pièce rigide peut être munie d'une tige filetée faisant saillie sur la face de la plaque sur laquelle doit être fixé l'organe extérieur.

Comme on l'a illustré en particulier sur les figures 2 et 3, la jonction composite 10 conforme à l'invention est prévue pour être intégrée dans un panneau sandwich 18, de conception classique, pour permettre le montage d'au moins un organe extérieur sur ce panneau.

De façon classique, le panneau sandwich 18 comprend une âme alvéolée 20 et deux couches de revêtement 22 placées de part et d'autre de l'âme alvéolée 20. L'âme 20 du panneau sandwich 18 présente le plus souvent une structure en nid d'abeilles comme on l'a représenté sur les figures 2 et 3. Toutefois, il peut aussi s'agir d'une mousse à cellules fermées ou ouvertes. Les matériaux entrant dans la composition de l'âme 20 et des revêtements 22 du panneau sandwich 18 peuvent être métalliques et/ou composites et/ou synthétiques, selon l'application envisagée.

Comme l'illustre bien la figure 3, l'épaisseur de la plaque formant la jonction composite 10 est égale à l'épaisseur de l'âme alvéolée 20 du panneau sandwich 18 dans lequel cette jonction doit être intégrée.

Pour mettre en place la jonction composite 10 dans le panneau sandwich 18, on usine dans l'âme 20 un évidement 24 présentant une forme complémentaire de celle de la jonction 10, avant la mise en place des revêtements 18. On introduit ensuite la jonction composite 10 dans l'évidement 24, après quoi on met en place les revêtements 22, de telle sorte que ces derniers recouvrent en totalité la jonction 10, à l'exception des collerettes 14a des pièces rigides 14. Plus précisément, on colle la jonction 10 aux revêtements 22 et on injecte un film moussant ou une résine entre la jonction et l'âme 20, une fois le panneau terminé.

Lorsque l'intégration de la jonction composite 10 est terminée, les cellules tubulaires élémentaires 12 de celle-ci sont orientées perpendiculairement aux couches de revêtement 22 du panneau sandwich 18. Il en est de même pour les trous de fixation 16 formés dans les pièces 14. Par conséquent, lorsqu'un organe extérieur quelconque est fixé sur les pièces rigides 14, par exemple au moyen de vis, les efforts qui sont appliqués à l'organe extérieur sont transmis au panneau par la jonction composite 10, au travers des cloisons séparant les cellules tubulaires élémentaires 12 de la jonction.

On comprend qu'en donnant aux cellules tubulaires élémentaires 12 de la jonction composite 10 ainsi qu'aux cloisons de séparation de ces cellules des formes et des dimensions adaptées aux efforts à transmettre, on assure une transmission efficace et sûre de ces efforts tout en bénéficiant d'une réduction importante de la masse de la jonction, par comparaison avec une jonction classique utilisant un insert monobloc. Plus précisément, la masse de la jonction composite selon l'invention peut être environ moitié de la masse d'une jonction monobloc de l'art antérieur.

Par ailleurs, du fait que la majeure partie de la jonction composite selon l'invention n'est pas métallique (seules les pièces rigides 14 peuvent être éventuellement métalliques) et du fait qu'elle contient un faible volume de résine par rapport au volume de fibres et qu'il est possible de choisir une résine présentant une grande stabilité hygroscopique, la jonction selon l'invention est presque insensible aux sollicitations thermiques. Elle présente donc une grande stabilité dimensionnelle lorsque l'application impose des contraintes thermiques et/ou hygroscopiques importantes, comme c'est notamment le cas dans le domaine spatial.

Comme on l'a déjà indiqué, le nombre de pièces rigides 14 intégrées dans la jonction composite 10, ainsi que la forme de certaines au moins des cellules tubulaires élémentaires 12 peuvent être différents de ceux qui ont été décrits dans les modes de réalisation illustrés sur les figures 1 à 3.

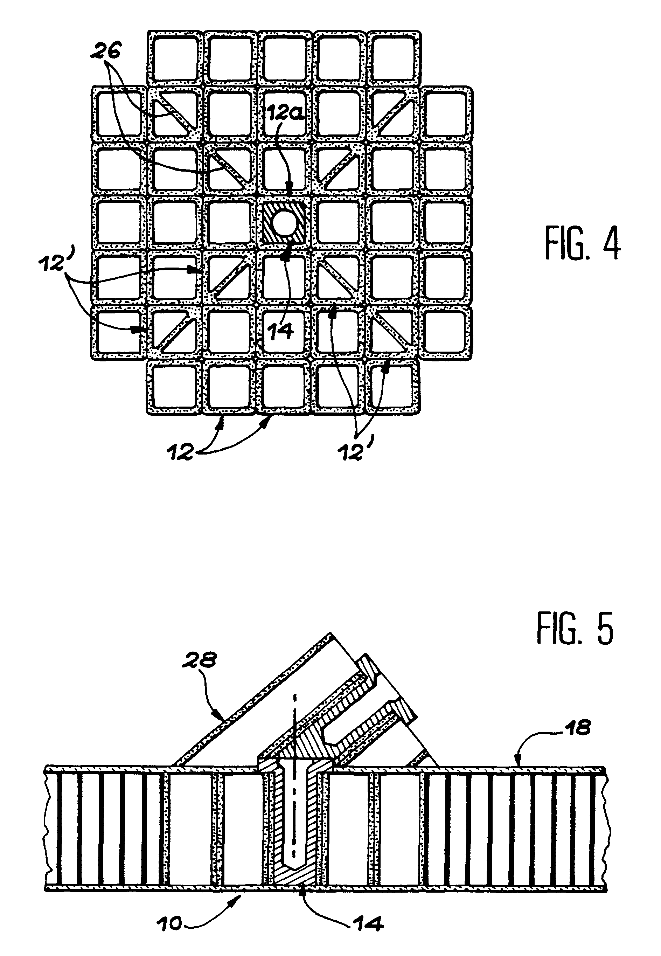

Ainsi, on a représenté sur la figure 4 le cas d'une jonction composite comprenant une seule pièce rigide 14, placée en son centre. De plus, si la majorité des cellules tubulaires élémentaires 12 présente une section carrée, celles dont une diagonale passe par la cellule d'introduction d'efforts 12a, qui sont désignés par la référence 12' sur la figure 4, comprennent une cloison interne 26 orientée selon cette diagonale.

Par ailleurs, et comme on l'a illustré sur la figure 5, l'organe extérieur peut ne pas être fixé directement sur la jonction composite 10, mais monté sur celle-ci par l'intermédiaire d'une pièce de liaison 28. Cette pièce de liaison est alors fixée sur la ou les pièces rigides 14 de la jonction composite 10, par exemple au moyen de vis. L'organe extérieur, qui peut notamment être constitué par une bielle (non représentée) orientée selon une direction inclinée par rapport au plan du panneau sandwich 18, est alors fixé sur la pièce de liaison 28 par tout moyen approprié tel que, par exemple, par vissage.

Dans ce cas, il est à noter que la pièce de liaison 28 peut présenter une structure comparable à celle de la jonction composite 10, comme on l'a représenté sur la figure 5.

## Revendications

1. Jonction composite (10), pour le montage d'au moins un organe extérieur sur un panneau sandwich (18) comprenant une âme alvéolée (20) et deux couches de revêtement (22) placées de part et d'autre de celle-ci, ladite jonction comprend une pluralité de cellules tubulaires élémentaires (12) juxtaposées aptes à être orientées dans le sens de l'épaisseur du panneau, à l'intérieur d'un évidement (24) formé dans l'âme du panneau sandwich, et au moins une cellule d'introduction d'efforts (12a) dans laquelle est logée une pièce rigide (14) de fixation dudit organe extérieur, **caractérisée en ce que** chaque cellule d'introduction d'efforts (12a) étant séparée d'un bord périphérique de la jonction, dans toutes les directions, par au moins une cellule tubulaire élémentaire (12), et chacune des cellules tubulaires élémentaires (12) comprenant une paroi composite (13) formée de mèches de fibres tressées et de résine.

2. Jonction composite selon la revendication 1, dans laquelle les cellules tubulaires élémentaires (12) juxtaposées sont séparées par des cloisons dont chacune comprend deux parois composites (13) liées l'une à l'autre par de la résine.

3. Jonction composite selon la revendication 2, dans laquelle les cloisons de séparation des cellules tubulaires élémentaires (12) juxtaposées sont alignées selon au moins deux directions différentes de transmission d'efforts.

4. Jonction composite selon l'une quelconque des revendications 2 et 3, dans laquelle les cloisons de séparation des cellules tubulaires élémentaires (12) juxtaposées forment des plans aptes à être orientés perpendiculairement aux couches de revêtement (22) du panneau sandwich (18).

5. Jonction composite selon l'une quelconque des revendications précédentes, dans laquelle au moins certaines des cellules tubulaires élémentaires (12) ont une section carrée.

6. Jonction composite selon la revendication 5, dans laquelle des cellules tubulaires élémentaires (12') de section carrée, dont une diagonale passe par une cellule d'introduction d'efforts (14), comprennent une cloison interne (26) orientée selon ladite diagonale.

7. Jonction composite selon l'une quelconque des revendications précédentes, dans laquelle ladite pièce rigide (14) est liée à la cellule d'introduction d'efforts (12a) par de la résine.

8. Jonction composite selon l'une quelconque des revendications précédentes, dans laquelle ladite pièce rigide (14) comprend un trou de fixation (16) orienté selon une direction longitudinale par rapport à la cellule d'introduction d'efforts (12a).

9. Panneau sandwich comprenant une âme alvéolée (20) et deux couches de revêtement (22) placées de part et d'autre de celle-ci, ledit panneau comprenant au moins une jonction composite (10) selon l'une quelconque des revendications précédentes.

## Claims

1. Composite joint (10), for fitting at least one external member to a sandwich panel (18) comprising a cellular core (20) and two covering layers (22) placed on either side thereof, said joint comprising a plurality of juxtaposed, elementary, tubular cells (12) orientable in the thickness direction of the panel, within a recess (24) formed in the core of the sandwich panel, and at least one stress introduction cell (12a) housing a rigid part (14) for fixing said external member, **characterized in that** each stress introduction cell (12a) is separated from a peripheral edge of the joint, in all directions, by at least one elementary, tubular cell (12), and each of the elementary, tubular cells (12) comprises a composite wall (13) formed from braided fibre roves and resin.

2. Composite joint according to claim 1, wherein the juxtaposed, elementary, tubular cells (12) are separated by partitions, each comprising two composite walls (13) connected together by.resin.

3. Composite joint according to claim 2, wherein the partitions separating the juxtaposed, elementary, tubular cells (12) are aligned in at least two different stress transmission directions.

4. Composite joint according to either of the claims 2 and 3, wherein the partitions separating the juxtaposed, elementary, tubular cells (12) form planes orientable perpendicular to the covering layers (22) of the sandwich panel (18).

5. Composite joint according to any one of the preceding claims, wherein at least some of the elementary, tubular cells (12) have a square cross-section.

6. Composite joint according to claim 5, wherein the elementary, tubular cells (12') having a square cross-section and whereof a diagonal passes through a stress introduction cell (14), comprise an internal partition (26) oriented in accordance with said diagonal.

7. Composite joint according to any one of the preceding claims, wherein said rigid part (14) is connected to the stress introduction cell (12a) by resin.

8. Composite joint according to any one of the preceding claims, wherein said rigid part (14) comprises a fixing hole (16) oriented in a longitudinal direction with respect to the stress introduction cell (12a).

9. Sandwich panel comprising a cellular core (20) and two covering layers (22) placed on either side thereof, said panel comprising at least one composite joint (10) according to any one of the preceding claims.

## Patentansprüche

1. Verbund-Verbindungsteil (10) für die Montage mindestens eines äußeren Elements an einer Sandwich-Platte (18), die eine zellig geformte Seele (20) und zwei Verkleidungsschichten (22), welche auf beiden Seiten derselben angeordnet sind, wobei das Verbindungsteil mehrere rohrförmige, nebeneinander angeordnete Elementarzellen (12) aufweist, die in der Richtung der Dicke der Platte im Innern einer in der Seele der Sandwich-Platte gebildeten Ausnehmung (24) ausgerichtet werden können, sowie mindestens eine Krafteinwirkungszelle (12a), in der ein starres Teil (14) zur Befestigung des äußeren Elements aufgenommen ist, aufweist, **dadurch gekennzeichnet, dass** jede Krafteinwirkungszelle (12a) von einem Umfangsrand des Verbindungsteils in allen Richtungen durch mindestens eine rohrförmige Elementarzelle (12) getrennt ist, und jede rohrförmige Elementarzelle (12) eine Verbundwand (13) aufweist, die aus geflochtenen Fasersträngen und aus Harz gebildet ist.

2. Verbund-Verbindungsteil nach Anspruch 1, wobei die rohrförmigen, nebeneinander angeordneten Elementarzellen (12) durch Trennwände getrennt sind, von denen jede zwei Verbundwände (13) umfasst, die durch Harz miteinander verbunden sind.

3. Verbund-Verbindungsteil nach Anspruch 2, wobei die Trennwände der nebeneinander angeordneten rohrförmigen Elementarzellen (12) in mindestens zwei unterschiedlichen Kraftübertragungsrichtungen ausgerichtet sind.

4. Verbund-Verbindungsteil nach einem der Ansprüche 2 oder 3, wobei die Trennwände der nebeneinander angeordneten rohrförmigen Elementarzellen (12) Ebenen bilden, die senkrecht zu den Verkleidungsschichten (22) der Sandwich-Platte (18) ausgerichtet werden können.

5. Verbund-Verbindungsteil nach einem der vorangehenden Ansprüche, wobei zumindest bestimmte rohrförmige Elementarzellen (12) einen quadratischen Querschnitt aufweisen.

6. Verbund-Verbindungsteil nach Anspruch 5, wobei die rohrförmigen Elementarzellen (12') mit quadratischem Querschnitt, von denen eine Diagonale durch eine Krafteinwirkungszelle (14) hindurchgeht, eine Innenwand (26) aufweisen, die gemäß der Diagonale ausgerichtet ist.

7. Verbund-Verbindungsteil nach einem der vorangehenden Ansprüche, wobei das starre Teil (14) mit der Krafteinwirkungszelle (12a) durch Harz verbunden ist.

8. Verbund-Verbindungsteil nach einem der vorangehenden Ansprüche, wobei das starre Teil (14) ein Befestigungsloch (16) aufweist, das in einer Längsrichtung in Bezug auf die Krafteinwirkungszelle (12a) ausgerichtet ist.

9. Sandwich-Platte mit einer zellig geformten Seele (20) und zwei Verkleidungsschichten (22), die auf deren beiden Seiten angeordnet sind, wobei die Platte mindestens ein Verbund-Verbindungsteil (10) nach einem der vorangehenden Ansprüche umfasst.
